# EUROPÄISCHE PATENTSCHRIFT

(11) **EP 3 569 444 B1**
(45) Veröffentlichungstag und Bekanntmachung des Hinweises auf die Patenterteilung: **26.08.2020**
(21) Anmeldenummer: 19174158.6
(22) Anmeldetag: 13.05.2019
(51) Int. Cl.: B60N 2/39, B60N 2/50, B60N 2/02, B60N 2/42, B60N 2/52

(54) **FAHRZEUGSITZ MIT EINER DÄMPFUNGSEINRICHTUNG**
VEHICLE SEAT WITH A DAMPENING DEVICE
SIÈGE DE VÉHICULE DOTÉ D'UN DISPOSITIF D'AMORTISSEMENT

(30) Priorität: 18.05.2018 DE 102018112019
(43) Veröffentlichungstag der Anmeldung: 20.11.2019
(73) Patentinhaber: Grammer AG, 92224 Amberg (DE)
(72) Erfinder: Haller, Erwin, 92262 Birgland (DE); Irrgang, Andreas, 92421 Schwandorf (DE); Krivenkov Dr., Konstantin, 92224 Amberg (DE)
(74) Vertreter: Hannke, Christian

(56) Entgegenhaltungen:
- EP-A2- 2 463 146
- US-A1- 2012 091 773
- US-A1- 2014 316 661

## Beschreibung

Die Erfindung betrifft einen Fahrzeugsitz mit einer Dämpfungseinrichtung zum Dämpfen von Schwenkbewegungen eines Oberteils des Fahrzeugsitzes gegenüber einem Unterteil des Fahrzeugsitzes um eine in einer Fahrzeugsitzlängsrichtung oder Fahrzeugsitzbreitenrichtung verlaufend angeordneten Schwenkachse.

Derartige Fahrzeugsitze sind aus dem Stand der Technik bekannt, beispielsweise aus WO 2014/176130 A1. Hierbei ist ein Fahrzeugsitz erkennbar, welcher um eine Schwenkachse verschwenkbar ist und mittels Feder- bzw. Dämpfungseinrichtungen gegenüber der Karosserie gefedert bzw. gedämpft gelagert ist. Die Anordnung der Federung bzw. Dämpfung ist allerdings sehr platzintensiv.

Es ist demzufolge Aufgabe der vorliegenden Erfindung, die Nachteile des Standes der Technik zu überkommen und einen Fahrzeugsitz zu präsentieren, welcher eine platzsparende sowie konstruktiv und funktional verbesserte Dämpfung gegenüber dem Stand der Technik aufweist.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, einen Fahrzeugsitz mit einer Dämpfungseinrichtung zum Dämpfen von Schwenkbewegungen des Fahrzeugsitzes bereitzustellen, wobei ein Oberteil des Fahrzeugsitzes mit einem Unterteil des Fahrzeugsitzes schwenkbar um eine in einer Fahrzeugsitzlängsrichtung oder Fahrzeugsitzbreitenrichtung verlaufend angeordneten Schwenkachse verbunden ist und gegenüber dem Unterteil schwenkbar gelagert ist, wobei die Dämpfungseinrichtung einen ersten Dämpfer mit einem ersten Ende und einem zweiten Ende umfasst, wobei das erste Ende schwenkbar mittels einer ersten Schwenkachse mit dem Unterteil verbunden ist und das zweite Ende mit einem ersten Hebelelement mittels einer fünften Schwenkachse schwenkbar verbunden ist, wobei das erste Hebelelement schwenkbar mittels einer zweiten Schwenkachse mit dem Unterteil verbunden ist und ein zweites Hebelelement vorgesehen ist, welches schwenkbar mittels einer dritten Schwenkachse mit dem ersten Hebelelement und schwenkbar mittels einer vierten Schwenkachse mit dem Oberteil verbunden ist.

Durch eine derartige erfindungsgemäße Anordnung ist es möglich, einen geringeren Platzbedarf der Dämpfungseinrichtung zu erreichen.

Durch die Hebelanordnung kann der Hub des Dämpfers bei einer Verschwenkung des Oberteils gegenüber dem Unterteil im Gegensatz zu einer direkten Anbringung des Dämpfers an Oberteil und Unterteil verändert werden.

Die Dämpferleistung der Dämpfungseinrichtung kann noch weiter verbessert bzw. an Situationen angepasst werden, wenn gemäß einer bevorzugten Ausführungsform die Dämpfungseinrichtung zusätzlich einen zweiten Dämpfer aufweist.

Noch bevorzugter weist die Dämpfungseinrichtung zusätzlich zum ersten Dämpfer und zweiten Dämpfer noch einen dritten Dämpfer und einen vierten Dämpfer auf.

Gemäß einer weiteren bevorzugten Ausführungsform sind der zweite Dämpfer, und gegebenenfalls der dritte Dämpfer und der vierte Dämpfer ebenso wie der erste Dämpfer mittels Hebelelementen mit dem Oberteil bzw. dem Unterteil verbunden.

Gemäß einer weiteren bevorzugten Ausführungsform weist das erste Hebelelement eine erste Aussparung auf. Aussparung heißt hierbei, dass ein Freibereich des Hebelelements vorhanden ist, so dass bei einer Verschwenkung des Oberteils, was einhergeht mit einer Verschwenkung des ersten Hebelelements und des zweiten Hebelelements, gegenüber dem Unterteil ein Anschlag mit der Anbindung des zweiten Hebelelements an dem Oberteil verhindert werden kann, insbesondere bei einer maximalen Auslenkung der Verschwenkung des Oberteils gegenüber dem Unterteil.

Gemäß einer weiteren bevorzugten Ausführungsform kann die Bewegung der Dämpfungseinrichtung, insbesondere des jeweiligen Dämpfers, verändert werden, wenn ein erster Abstand der fünften Schwenkachse zu der zweiten Schwenkachse größer ist als ein zweiter Abstand der dritten Schwenkachse zu der vierten Schwenkachse.

Hierdurch kann der Hub des jeweiligen Dämpfers bei einer Verschwenkung des Oberteils gegenüber dem Unterteil bedarfsgemäß angepasst werden. Besonders bevorzugt ist der erste Abstand halb so groß wie der zweite Abstand.

Besonders bevorzugt ist ein dritter Abstand der fünften Schwenkachse zu der dritten Schwenkachse gleich dem ersten Abstand der dritten Schwenkachse zu der vierten Schwenkachse. Entsprechend ist ein vierter Abstand der dritten Schwenkachse zu der zweiten Schwenkachse gleich dem dritten Abstand.

Gemäß einer weiteren bevorzugten Ausführungsform ist eine Länge des Oberteils in Fahrzeugsitzlängsrichtung oder in Fahrzeugsitzbreitenrichtung kürzer als eine Länge des Unterteils in Fahrzeugsitzlängsrichtung oder Fahrzeugsitzbreitenrichtung und wobei der Dämpfer mit dem ersten Ende an einer Innenseite eines Unterteilabschnitts, welcher senkrecht zu dem Unterteil steht und damit verbunden ist, und das zweite Hebelelement an einer Außenseite eines Oberteilabschnitts, welcher senkrecht zu dem Oberteil steht, verbunden ist.

Bevorzugt sind das Unterteil sowie das Oberteil flächig ausgebildet. Der Oberteilabschnitt bzw. der Unterteilabschnitt sind ebenso flächig ausgebildet, mit dem Oberteil bzw. dem Unterteil verbunden und stehen dazu senkrecht.

Gemäß einer weiteren bevorzugten Ausführungsform sind der erste Dämpfer und der zweite Dämpfer achsensymmetrisch zu der Schwenkachse angeordnet.

Hierdurch ist es möglich, bei einer Verschwenkung des Oberteils gegenüber dem Unterteil gegen den Uhrzeigersinn und im Uhrzeigersinn um die Schwenkachse eine gleichmäßige Dämpfung zu erreichen. Insbesondere bedeutet das, dass auch die Hebelelemente entsprechend gleich ausgebildet sind. Die Symmetrie bezieht sich insbesondere auf den normalen Betriebszustand, das heißt, einem nicht ausgelenkten Betriebszustand. Bei einer Verschwenkung des Oberteils ändert sich natürlich die Lage und die Position der Dämpfer und entsprechend der Hebel abhängig von dem Oberteil.

Gemäß einer weiteren bevorzugten Ausführungsform sind ebenso der dritte Dämpfer und der vierte Dämpfer achsensymmetrisch zu der Schwenkachse angeordnet.

Die Symmetrie bezieht sich auch hierbei insbesondere auf den normalen Betriebszustand, das heißt, einem nicht ausgelenkten Betriebszustand. Bei einer Verschwenkung des Oberteils ändert sich natürlich die Lage und die Position der Dämpfer und entsprechend der Hebel abhängig von dem Oberteil.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1A: Fahrzeugsitz gemäß einer bevorzugten Ausführungsform in einem normalen Betriebszustand;
- Fig. 1B: Fahrzeugsitz gemäß Figur 1A in einem ausgelenkten Betriebszustand;
- Fig. 2A: Dämpfungseinrichtung des Fahrzeugsitzes in dem normalen Betriebszustand in einer perspektivischen Ansicht;
- Fig. 2B: Dämpfungseinrichtung der Figur 2A in dem ausgelenkten Betriebszustand in einer perspektivischen Ansicht;
- Fig. 3A: Dämpfungseinrichtung gemäß Figur 2A in einem normalen Betriebszustand in einer Draufsicht;
- Fig. 3B: Dämpfungseinrichtung gemäß Figur 2A in einer Vorderansicht;
- Fig. 3C: Dämpfungseinrichtung gemäß Figur 2A in einem ausgelenkten Betriebszustand in einer Draufsicht;
- Fig. 3D: Dämpfungseinrichtung gemäß Figur 3C in einer Vorderansicht;
- Fig. 4A: Dämpfungseinrichtung gemäß dem Stand der Technik;
- Fig. 4B: schematische Darstellung der Dämpfungseinrichtung gemäß einer bevorzugten Ausführungsform.

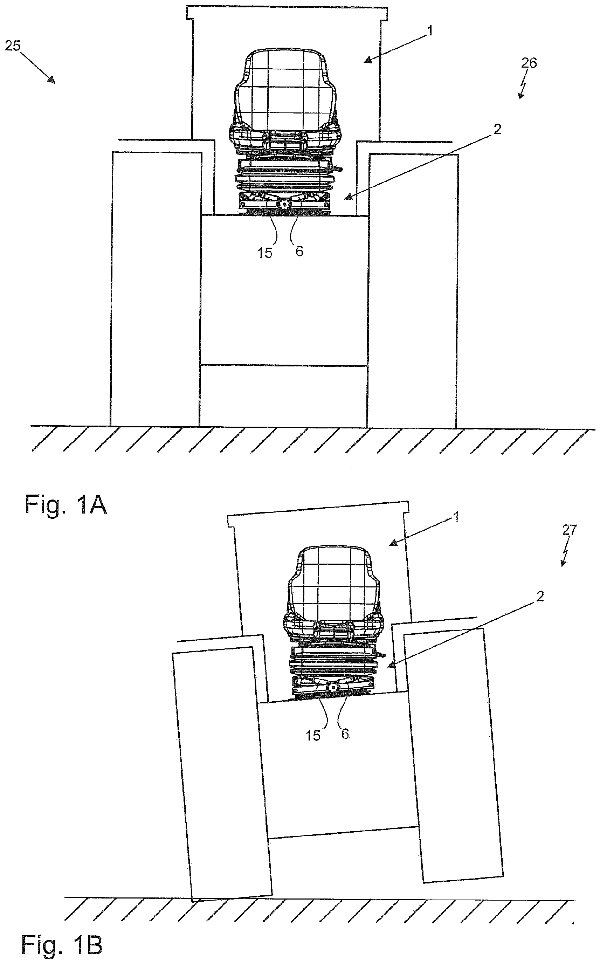

In der Figur 1A ist ein erfindungsgemäßer Fahrzeugsitz 1 zu erkennen, welcher in einer Kabine eines Fahrzeugs 25 montiert ist. Das Fahrzeug 25 und entsprechend der Fahrzeugsitz 1 sind in einem normalen Betriebszustand 26, das heißt, das Fahrzeug 25 bzw. der Fahrzeugsitz 1 sind nicht ausgelenkt. Der Fahrzeugsitz 1 weist eine Dämpfungseinrichtung 2 auf, welche vorliegend einen ersten Dämpfer 6 und einen zweiten Dämpfer 15 umfasst.

In der Figur 1B ist der Fahrzeugsitz 1 der Figur 1A zu erkennen, wobei hier das Fahrzeug 25 bzw. der Fahrzeugsitz 1 sich in einem ausgelenkten Betriebszustand 27 befinden. Insbesondere wird das Fahrzeug 25 lediglich auf einer Seite ausgelenkt, vorliegend betrachtet die rechte Seite.

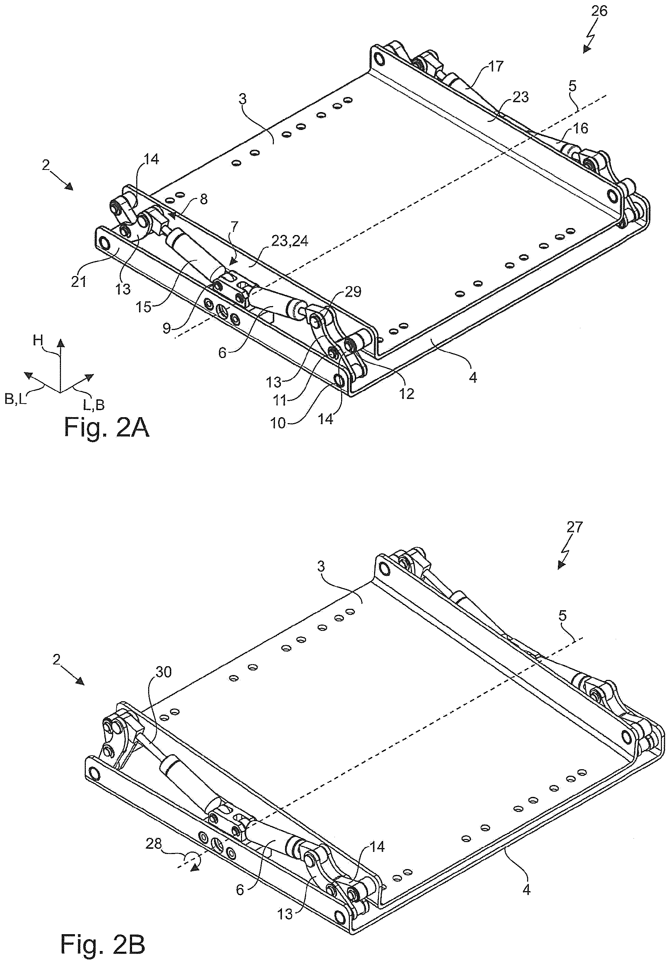

Die Figur 2A zeigt eine besonders bevorzugte Ausführungsform einer Dämpfungsvorrichtung 2, welche vorliegend einen ersten Dämpfer 6, einen zweiten Dämpfer 15, einen dritten Dämpfer 16 und einen vierten Dämpfer 17 umfasst. Jeder dieser Dämpfer 6, 15, 16, 17 weist ein erstes Ende 7 und ein zweites Ende 8 auf, wobei das erste Ende 7 des Dämpfers 6, 15, 16, 17 mittels einer ersten Schwenkachse 9 schwenkbar mit dem Unterteil 4 verbunden ist, und wobei das zweite Ende 8 des Dämpfers 6, 15, 16, 17 mittels einer fünften Schwenkachse 29 mit einem ersten Hebelelement 13 schwenkbar verbunden ist. Das erste Hebelelement 13 ist andererseits mittels einer zweiten Schwenkachse 10 schwenkbar mit dem Unterteil 4 verbunden, wobei ein zweites Hebelelement 14 vorgesehen ist, welches mittels einer dritten Schwenkachse 11 mit dem ersten Hebelelement 13 schwenkbar verbunden ist und mittels einer vierten Schwenkachse 12 schwenkbar mit dem Oberteil 3 verbunden ist.

Das Oberteil 3 ist schwenkbar um die Schwenkachse 5 verbunden, so dass das Oberteil 3 gegenüber dem Unterteil 4 verschwenkt werden kann. Ebenso ist die Schwenkachse 5 mit dem Unterteil 4 verbunden.

Das bedeutet, dass das zweite Ende 8 des Dämpfers 6, 15, 16, 17 im Gegensatz zum ersten Ende 7 nicht starr bis auf Drehung mit dem Oberteil 3 verbunden ist, sondern über die Hebelanordnung umfassend das erste Hebelelement 13 und das zweite Hebelelement 14.

Durch eine derartige Anordnung der Dämpfer 6, 15, 16, 17 ist eine lineare oder nichtlineare Über- oder Untersetzung des Hubes des Dämpfers 6, 15, 16, 17 im Vergleich zu der Auslenkung des Oberteils 3 erreichbar, wie in Bezug auf die nachfolgenden Figuren genauer erläutert wird.

In der Figur 2B ist der Gegenstand der Figur 2A zu erkennen, jedoch in einer ausgelenkten Position 27, das heißt, dass das Oberteil 3 gegenüber dem Unterteil 4 um die Schwenkachse 5 verschwenkt ist. Entsprechend ist zu erkennen, dass der Hub der Dämpfer 6, 15, 16, 17 entsprechend verändert ist, das heißt, dass die Länge des ausgefahrenen Kolbens 30 für jeden Dämpfer 6, 15, 16, 17 verändert ist.

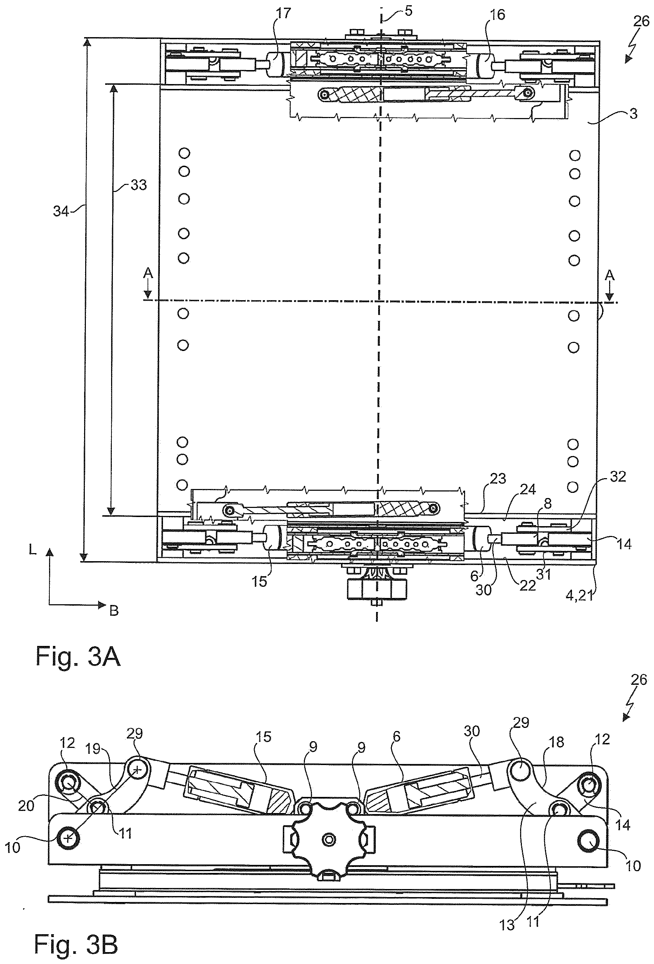

Die Figur 3A zeigt die Dämpfungsvorrichtung 2 in einer Draufsicht gemäß einer bevorzugten Ausführungsform in dem normalen Betriebszustand 26. Die Ausführungen zum ersten Dämpfer 6 gelten entsprechend auch für den zweiten Dämpfer 15, den dritten Dämpfer 16 und den vierten Dämpfer 17.

Insbesondere sind der erste Dämpfer 6 und der zweite Dämpfer 15 symmetrisch zu der Schwenkachse 5 angeordnet. Gleiches gilt ebenso für die dritten Dämpfer 16 und den vierten Dämpfer 17.

Weiter ist zu erkennen, dass das erste Hebelelement 13 mit dem zweiten Ende 8 des ersten Dämpfers 6 verbunden ist und umfasst ein erstes Hebelelementteil 31 und ein zweites Hebelelementteil 32, wobei das zweite Ende 8 des Dämpfers 6 zwischen dem ersten Hebelelementteil 31 und dem zweiten Hebelelementteil 32, in Fahrzeugsitzlängsrichtung L gesehen, angeordnet ist.

Ebenso sind die Dämpfer 6, 15, 16, 17 je nach Ausführungsform jeweils entweder in Fahrzeugsitzbreitenrichtung B oder Fahrzeugsitzlängsrichtung L verlaufend angeordnet.

Insbesondere weist das Oberteil 3 eine Länge 33, in Fahrzeugsitzlängsrichtung L oder Fahrzeugsitzbreitenrichtung B gesehen, auf, welche gegenüber einer Länge 34 des Unterteils 4, ebenso in Fahrzeugsitzlängsrichtung L gesehen, kleiner ist. Weiter weist das Oberteil 3 einen Oberteilabschnitt 23 und das Unterteil 4 einen Unterteilabschnitt 21 auf, welche jeweils senkrecht dazu verlaufend ausgebildet sind. Die Dämpfer 6, 15, 16, 17 sind, in Fahrzeugsitzlängsrichtung L betrachtet, zwischen einer Außenseite 24 des Oberteilabschnitts 23 und einer Innenseite 22 des Unterteilabschnitts 21. Durch eine derartige Ausgestaltung bzw. derartige Anbringung der Dämpfer 6, 15, 16, 17 ist eine weitere Platzreduzierung möglich gegenüber dem Stand der Technik, insbesondere eine Reduktion des Abstandes zwischen Unterteil 4 und Oberteil 3 in Fahrzeugsitzhöhenrichtung H gesehen.

Die Figur 3B zeigt den Gegenstand der Figur 3A in einer Vorderansicht, ebenfalls in dem normalen Betriebszustand 26.

Wie der Figur 3B zu entnehmen ist, ist ein erster Abstand 19 zwischen der fünften Schwenkachse 29 und der zweiten Schwenkachse 10 größer als ein zweiter Abstand 20 zwischen der dritten Schwenkachse 11 und der vierten Schwenkachse 12. Bevorzugt ist der erste Abstand 19 doppelt so groß wie der zweite Abstand 20.

Darüber hinaus weist das erste Hebelelement 13 eine erste Aussparung 18 auf. Genauer gesagt weisen das erste Hebelelementteil 31 und das zweite Hebelelementteil 32 des ersten Hebelelements 13 jeweils eine erste Aussparung 18 auf. Die erste Aussparung 18 ist dabei wie folgt ausgebildet.

Das erste Hebelelement 13 bzw. die Hebelelementteile 31, 32 sind dabei flächig ausgebildet, und das Hebelelement 13 bzw. die Hebelelementteile 31, 32 liegen vorzugsweise in parallelen Ebenen oder in einer Ebene, welche gebildet wird/werden aus der Fahrzeugsitzbreitenrichtung B und Fahrzeugsitzhöhenrichtung H. Jedoch gibt es auch eine geringe Ausdehnung in Fahrzeugsitzlängsrichtung L.

Dadurch, dass das erste Hebelelement 13 ein erstes Hebelelementteil 31 und ein zweites Hebelelementteil 32 umfasst und dass das zweite Ende des Dämpfers 8, in Fahrzeugsitzlängsrichtung L gesehen, zwischen dem ersten Hebelelementteil 31 und dem zweiten Hebelelementteil 32 angeordnet ist, ist es möglich, dass bei einer maximalen Verschwenkung des Oberteils 3 gegenüber dem Unterteil 4 um die Schwenkachse 5 das erste Hebelelement 13 mit der vierten Schwenkachse 12 kollidiert. Die erste Aussparung 18 ist hierbei derart ausgestaltet, dass bei einer maximalen Verschwenkung des Oberteils 3 dieses Kollidieren nicht geschieht. Insbesondere ist eine Seite 35, welche dem Dämpfer 6, 15, 16, 17 abgewandt sind, bogenförmig ausgebildet.

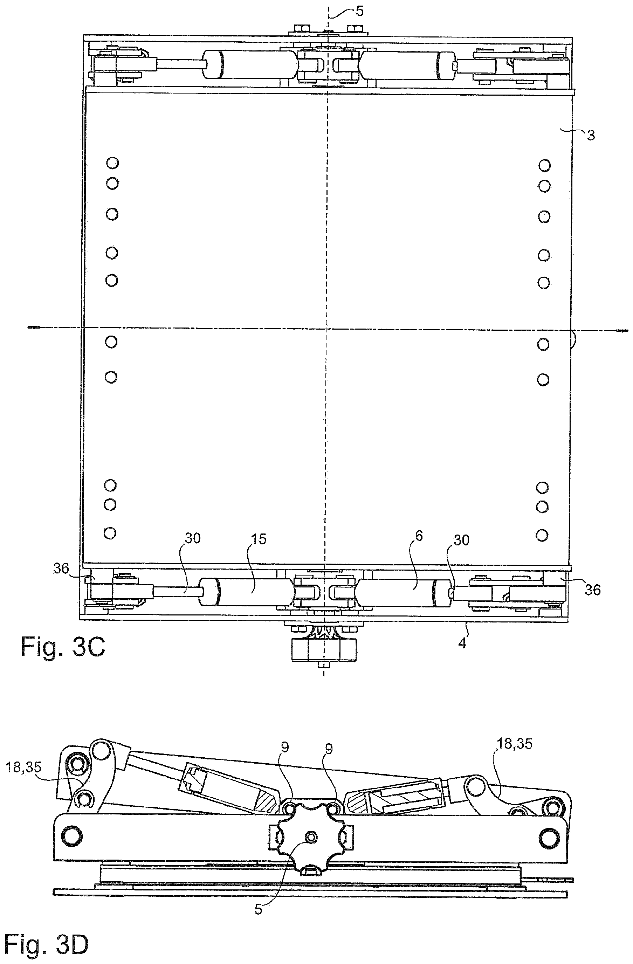

Eine derartige Situation bei einer maximalen Verschwenkung des Oberteils 3 gegenüber dem Unterteil 4 ist in den Figuren 3C und 3D dargestellt. Dadurch, dass die Seite 18 bogenförmig bzw. kurvenförmig ausgebildet ist, kann eine Kollision mit dem zweiten Hebelelement 14 bzw. der Aufhängung des zweiten Hebelelements 14 an dem Oberteil 3 verhindert werden.

Ebenso ist erkennbar, dass die erste Schwenkachse 9 in Fahrzeugsitzhöhenrichtung H gesehen über der Schwenkachse 5 angeordnet ist.

Weiter sind Aufhängungen 36 zu erkennen, mittels welchen das zweite Hebelelement 14 mit dem Oberteil 3 verbunden werden kann.

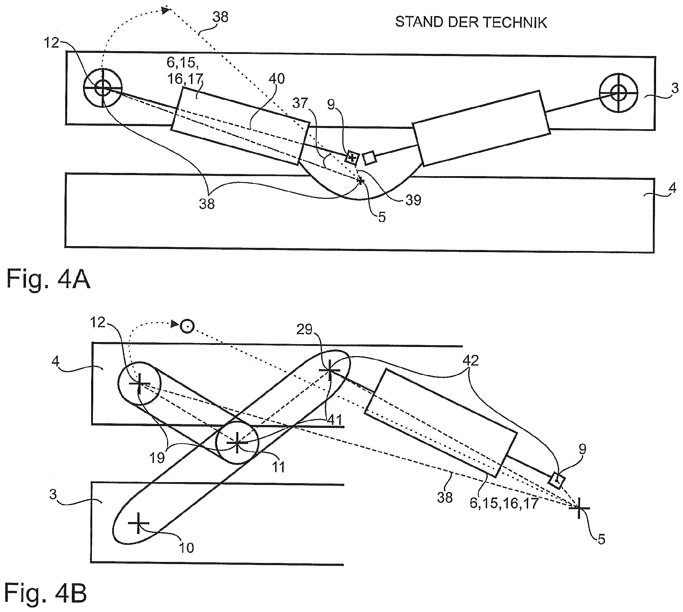

In der Figur 4B ist das zugrunde liegende Funktionsprinzip im Gegensatz zum Funktionsprinzip aus dem Stand der Technik, wie in der Figur 4A dargestellt, gezeigt.

Die Figur 4A zeigt eine ortsfeste Aufhängung des Dämpfers 6, 15, 16, 17 an dem Unterteil 4 und eine ortsfeste Aufhängung an dem Oberteil 3. Ortsfest bedeutet hier ortsfest bis auf Drehung. Bei einer Verschwenkung des Oberteils 3 um die Schwenkachse 5 um einen Winkel 37, wird ebenso der Dämpfer 6, 15, 16, 17 um die erste Schwenkachse 9 verschwenkt. Dabei ist der dritte Abstand 38 der vierten Schwenkachse 12 zu der Schwenkachse 5 sowie der vierte Abstand 39 der Schwenkachse 5 zu der ersten Schwenkachse 9 konstant, eine Veränderliche ist die Länge 40 der ersten Schwenkachse 9 zu der vierten Schwenkachse 12, einhergehend mit einer Veränderung des Hubes des Dämpfers 6, 15, 16, 17. Durch eine derartige Aufhängung ist lediglich eine geringe Veränderung des Hubes des Dämpfers 6, 15, 16, 17 möglich.

Die Figur 4B hingegen zeigt die Funktionsweise der erfindungsgemäßen Dämpfungseinrichtung 2.

Wie beim Stand der Technik ist der dritte Abstand 38 weiterhin konstant, sowie der vierte Abstand 39. Jedoch ist die Länge 40 der ersten Schwenkachse 9 zu der vierten Schwenkachse 12 über das erste Hebelelement 13 und das zweite Hebelelement 14 grundlegend anders. Die Länge 40 wird nun zusammengesetzt aus dem ersten Abstand 19, dem fünften Abstand 41 von der dritten Schwenkachse 11 zu der fünften Schwenkachse 29 und dem sechsten Abstand 42 der fünften Schwenkachse 29 zu der ersten Schwenkachse 9. Durch diese Hebelanordnung kann insbesondere der sechste Abstand 42 deutlich gegenüber dem Stand der Technik verändert werden, einhergehend mit einer deutlich größeren Hubänderung des Dämpfers 6, 15, 16, 17.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Dämpfungseinrichtung
- 3: Oberteil
- 4: Unterteil
- 5: Schwenkachse
- 6: erster Dämpfer
- 7: erstes Ende des ersten Dämpfers
- 8: zweites Ende des zweiten Dämpfers
- 9: erste Schwenkachse
- 10: zweite Schwenkachse
- 11: dritte Schwenkachse
- 12: vierte Schwenkachse
- 13: erstes Hebelelement
- 14: zweites Hebelelement
- 15: zweiter Dämpfer
- 16: dritter Dämpfer
- 17: vierter Dämpfer
- 18: erste Aussparung
- 19: erster Abstand
- 20: zweiter Abstand
- 21: Unterteilabschnitt
- 22: Innenseite des Unterteilabschnitts
- 23: Oberteilabschnitt
- 24: Außenseite des Oberteilabschnitts
- 25: Fahrzeug
- 26: normaler Betriebszustand
- 27: ausgelenkter Betriebszustand
- 28: Pfeil
- 29: fünfte Schwenkachse
- 30: Kolbenstange
- 31: erstes Hebelelementteil
- 32: zweites Hebelelementteil
- 33: Länge Oberteil
- 34: Länge Unterteil
- 35: Seite
- 36: Aufhängung
- 37: Winkel
- 38: dritter Abstand
- 39: vierter Abstand
- 40: Länge
- 41: fünfter Abstand
- 42: sechster Abstand
- L: Fahrzeugsitzlängsrichtung
- B: Fahrzeugsitzbreitenrichtung
- H: Fahrzeugsitzhöhenrichtung

## Patentansprüche

1. Fahrzeugsitz (1) mit einer Dämpfungseinrichtung (2) zum Dämpfen von Schwenkbewegungen des Fahrzeugsitzes (1), wobei ein Oberteil (3) des Fahrzeugsitzes (1) mit einem Unterteil (4) des Fahrzeugsitzes (1) schwenkbar um eine in einer Fahrzeugsitzlängsrichtung (L) oder Fahrzeugsitzbreitenrichtung (B) verlaufend angeordneten Schwenkachse (5) verbunden ist und gegenüber dem Unterteil (4) schwenkbar gelagert ist,
**dadurch gekennzeichnet, dass**
die Dämpfungseinrichtung (2) einen ersten Dämpfer (6) mit einem ersten Ende (7) und einem zweiten Ende (8) umfasst, wobei das erste Ende (7) schwenkbar mittels einer ersten Schwenkachse (9) mit dem Unterteil (4) verbunden ist und das zweite Ende (8) schwenkbar mittels einer fünften Schwenkachse (29) mit einem ersten Hebelelement (13) verbunden ist, wobei das erste Hebelelement (13) schwenkbar mittels einer zweiten Schwenkachse (10) mit dem Unterteil (4) verbunden ist und ein zweites Hebelelement (14) vorgesehen ist, welches schwenkbar mittels einer dritten Schwenkachse (11) mit dem ersten Hebelelement (13) und schwenkbar mittels einer vierten Schwenkachse (12) mit dem Oberteil (3) verbunden ist.

2. Fahrzeugsitz (1) nach Anspruch 1,
**dadurch gekennzeichnet, dass**
die Dämpfungseinrichtung (2) zusätzlich einen zweiten Dämpfer (15) und bevorzugt zusätzlich einen dritten Dämpfer (16) und einen vierten Dämpfer (17) aufweist.

3. Fahrzeugsitz (1) nach Anspruch 1 oder Anspruch 2,
**dadurch gekennzeichnet, dass**
der Dämpfer oder die Dämpfer (6, 15, 16, 17) in Fahrzeugsitzbreitenrichtung (B) oder Fahrzeugsitzlängsrichtung (L) verlaufend angeordnet sind.

4. Fahrzeugsitz (1) nach einem der Ansprüche 1-3,
**dadurch gekennzeichnet, dass**
das erste Hebelelement (13) eine erste Aussparung (18) aufweist.

5. Fahrzeugsitz (1) nach einem der Ansprüche 1-4,
**dadurch gekennzeichnet, dass**
ein erster Abstand (19) der fünften Schwenkachse (29) zu der zweiten Schwenkachse (10) größer ist als ein zweiter Abstand (20) der dritten Schwenkachse (11) zu der vierten Schwenkachse (12).

6. Fahrzeugsitz (1) nach einem der Ansprüche 1-5,
**dadurch gekennzeichnet, dass**
eine Länge (33) des Oberteils (3) in Fahrzeugsitzlängsrichtung (L) kürzer ist als eine Länge (34) des Unterteils (4) in Fahrzeugsitzlängsrichtung (L) und wobei der jeweilige Dämpfer (6, 15, 16, 17) mit dem ersten Ende (7) an einer Innenseite eines Unterteilabschnitts (22), welcher senkrecht zu dem Unterteil (4) steht und damit verbunden ist, und das zweite Hebelelement (14) an einer Außenseite eines Oberteilabschnitts (24), welcher senkrecht zu dem Oberteil (3) steht, verbunden ist.

7. Fahrzeugsitz (1) nach Anspruch 2,
**dadurch gekennzeichnet, dass**
der erste Dämpfer (6) und der zweite Dämpfer (15) achsensymmetrisch zu der Schwenkachse (5) angeordnet sind.

8. Fahrzeugsitz (1) nach Anspruch 7,
**dadurch gekennzeichnet, dass**
der dritte Dämpfer (16) und der vierte Dämpfer (17) achsensymmetrisch zu der Schwenkachse (5) angeordnet sind.

## Claims

1. Vehicle seat (1) with a damping device (2) for damping pivoting movements of the vehicle seat (1), wherein an upper part (3) of the vehicle seat (1) is pivotally connected to a lower part (4) of the vehicle seat (1) about a pivot axis (5) arranged running in a vehicle seat longitudinal direction (L) or vehicle seat width direction (B) and is pivotally mounted relative to the lower part (4),
**characterised in that**
the damping device (2) comprises a first damper (6) having a first end (7) and a second end (8), wherein the first end (7) is pivotally connected to the lower part (4) by means of a first pivot axis (9) and the second end (8) is pivotally connected to a first lever element (13) by means of a fifth pivot axis (29), wherein the first lever element (13) is pivotally connected to the lower part (4) by means of a second pivot axis (10), and a second lever element (14) is provided which is pivotally connected by means of a third pivot axis (11) with the first lever element (13) and pivotally by means of a fourth pivot axis (12) with the upper part (3).

2. Vehicle seat (1) according to claim 1,
**characterised in that**
the damping device (2) additionally has a second damper (15) and preferably additionally a third damper (16) and a fourth damper (17).

3. Vehicle seat (1) according to either claim 1 or claim 2,
**characterised in that**
the damper or dampers (6, 15, 16, 17) run(s) in the vehicle seat width direction (B) or the vehicle seat longitudinal direction (L).

4. Vehicle seat (1) according to any of claims 1-3,
**characterised in that**
the first lever element (13) has a first recess (18).

5. Vehicle seat (1) according to any of claims 1-4,
**characterised in that**
a first distance (19) of the fifth pivot axis (29) to the second pivot axis (10) is greater than a second distance (20) of the third pivot axis (11) to the fourth pivot axis (12).

6. The vehicle seat (1) according to any of claims 1-5,
**characterised in that**
a length (33) of the upper part (3) in the vehicle seat longitudinal direction (L) is shorter than a length (34) of the lower part (4) in the vehicle seat longitudinal direction (L) and wherein the respective damper (6, 15, 16, 17) is connected to an inner side of a lower part portion (22) at the first end (7), the lower part portion being perpendicular to the lower part (4) and the second lever element (14) is connected to an outer side of an upper part portion (24) which is perpendicular to the upper part (3).

7. Vehicle seat (1) according to claim 2,
**characterised in that**
the first damper (6) and the second damper (15) are arranged axially symmetrically to the pivot axis (5).

8. Vehicle seat (1) according to claim 7,
**characterised in that**
the third damper (16) and the fourth damper (17) are arranged axially symmetrically to the pivot axis (5).

## Revendications

1. Siège de véhicule (1) comportant un dispositif d'amortissement (2) pour l'amortissement de mouvements de pivotement du siège de véhicule (1), une partie supérieure (3) du siège de véhicule (1) étant reliée avec une partie inférieure (4) du siège de véhicule (1) de façon pivotante autour d'un axe de pivotement (5) disposé s'étendant dans une direction longitudinale (L) du siège de véhicule ou une direction de la largeur (B) du siège de véhicule et étant montée pivotante vis-à-vis de la partie inférieure (4),
**caractérisé par le fait que**
le dispositif d'amortissement (2) comporte un premier amortisseur (6) ayant une première extrémité (7) et une seconde extrémité (8), la première extrémité étant reliée de façon pivotante au moyen d'un premier axe de pivotement (9) avec la partie inférieure (4) et la seconde extrémité (8) étant reliée de façon pivotante au moyen d'un cinquième axe de pivotement (29) avec un premier élément levier (13), le premier élément levier (13) étant relié de façon pivotante au moyen d'un deuxième axe de pivotement (10) avec la partie inférieure (4) et un deuxième élément levier (14) étant prévu, lequel est relié de façon pivotante au moyen d'un troisième axe de pivotement (11), avec le premier élément levier (13) et de façon pivotante au moyen d'un quatrième axe de pivotement (12) avec la partie supérieure (3).

2. Siège de véhicule (1) selon la revendication 1,
**caractérisé par le fait que**
le dispositif d'amortissement (2) présente en outre un deuxième amortisseur (15) et, de préférence, en outre un troisième amortisseur (16) et un quatrième amortisseur (17).

3. Siège de véhicule (1) selon la revendication 1 ou selon la revendication 2,
**caractérisé par le fait que**
l'amortisseur ou les amortisseurs (6, 15, 16, 17) sont disposés s'étendant dans la direction de la largeur (B) du siège de véhicule ou dans la direction longitudinale (L) du siège de véhicule.

4. Siège de véhicule (1) selon l'une des revendications 1 à 3,
**caractérisé par le fait que**
le premier élément levier (13) présente un premier renfoncement (18).

5. Siège de véhicule (1) selon l'une des revendications 1 à 4,
**caractérisé par le fait qu'**
une première distance (19) du cinquième axe de pivotement (29) au deuxième axe de pivotement (10) est plus grande qu'une seconde distance (20) du troisième axe de pivotement (11) au quatrième axe de pivotement (12).

6. Siège de véhicule (1) selon l'une des revendications 1 à 5,
**caractérisé par le fait qu'**
une longueur (33) de la partie supérieure (3) dans la direction longitudinale (L) du siège de véhicule est plus courte qu'une longueur (34) de la partie inférieure (4) dans la direction longitudinale (L) du siège de véhicule, et où chacun des amortisseurs (6, 15, 16, 17) est relié par la première extrémité (7) à un côté interne d'une section (22) de partie inférieure, laquelle se trouve perpendiculaire à la partie inférieure (4) et est reliée avec elle, et le second élément levier (14) est relié à un côté externe d'une section (24) de partie supérieure, laquelle se trouve perpendiculaire à la partie supérieure (3).

7. Siège de véhicule (1) selon la revendication 2,
**caractérisé par le fait que**
le premier amortisseur (6) et le second amortisseur (15) sont disposés en symétrie axiale par rapport à l'axe de pivotement (5).

8. Siège de véhicule (1) selon la revendication 7,
**caractérisé par le fait que**
le troisième amortisseur (16) et le quatrième amortisseur (17) sont disposés en symétrie axiale par rapport à l'axe de pivotement (5).
